# EUROPEAN PATENT APPLICATION

(11) **EP 1 525 801 A1**
(43) Date of publication of application: **27.04.2005**
(21) Application number: 05002106.2
(22) Date of filing: 24.09.2003
(51) Int. Cl.: A23B 7/04

(54) **Process for freezing fruits**

(30) Priority: 04.10.2002 EP 02256994
(62) Divisional of application: 03255999.9
(71) Applicant: UNILEVER PLC, London EC4P 4BQ (GB); UNILEVER N.V., 3013 AL Rotterdam (NL)
(72) Inventor: Gidley, Michael John Unilever R&D Colworth, Bedfordshire MK44 1LQ (GB); Ormerod, Andrew Paul Unilever R&D Colworth, Bedfordshire MK44 1LQ (GB)
(74) Representative: Hugot, Alain Eric Philippe

(57) **Abstract**

Fruits are frozen in a process wherein i) fruits are cooled then ii) fruits are under-cooled fruits to a temperature between -6 C and -15 C then iii) the temperature is further reduced until ice formation occurs. Use in frozen fruits salad and frozen dessert.

## Description

### Field of the invention

The present invention relates to a process for freezing fruits and to frozen fruit salads and to frozen desserts including frozen fruits. More particularly, the invention relates to a novel freezing process which provides frozen fruits of excellent quality and to be eaten frozen.

### Background of the invention

The freezing of fruit by conventional freezing regimes typically produces hard, icy textures with bland flavours. A current method for producing softer textures in the frozen state involves increasing the sugar content of the fruit, however this leads to unnatural textures, which can be jam-like in perception. There is no process currently available for producing frozen fruit with fresh-like quality. More particularly, there is no current process allowing for the production of frozen fruits which, when eaten frozen, retain the strong and characteristic flavour of unfrozen fruits.

US 6 096 361 discloses a method of preservation wherein food is relatively rapidly cooled from room temperature to close to the freezing point and then slowly cooled at a gradual cooling rate of 0.01 to 0.5°C/hour to below the freezing point. This non-frozen preservation method may be then followed by a rapid freezing treatment to achieve a food wherein the outer cells of the food are frozen and the inner cells preserved in a non-frozen state. It is disclosed that free water moves from the intracellular fluid to the extra cellular fluid, resulting in the simultaneous dilution of the extra cellular fluid and concentration of the intracellular fluid, which makes it easier for the extra cellular fluid to freeze and, conversely, more difficult for the intracellular fluid to freeze. Frozen fruit produced by this method (frozen from a supercooled state 3C to 10C below the freezing point) is described as being higher in quality than products of a conventional method, with finer ice crystals, better melting in the mouth, and a milder taste.

This process therefore presents the recognised drawback up to now inherent to frozen fruits, namely a milder, bland taste. In other respect it requires a very slow cooling process which renders it incompatible with any industrial application.

It has now been found that the use of a specific new freezing process can lead to the production of frozen fruits which retain to a great extent their original taste and which moreover present a structure which is close to the structure of fresh fruits. It has also been found that this new process can be operated at a cooling rate fully compatible with industrial processes.

### Tests and definitions

### Fruits

Fruits shall mean in the following description either complete fruits (e.g. grapes, berries, strawberries, raspberries, blackberries) or parts of fruits (e.g. banana cylinders, mango cubes, kiwi slices).

### Freezing point:

The freezing point of a fruit is defined as the constant temperature at which the bulk of ice crystallisation occurs following nucleation ie. the plateau in the cooling temperature profile following the increase in temperature from the under-cooled state caused by nucleation and initial ice formation.

### Under-cooling

Under-cooling refers to the reduction of the temperature of a fruit to a temperature below its freezing point without the formation of ice crystals occurring.

### Mechanical Testing Method

The mechanical testing was performed as follows. Several 1cm cubes of tissue were cut from fruit using a sharp blade or knife. The cubes were then placed in sealed plastic bags which were then placed in either a Montford Environment Test Chamber or a conventional blast freezer. The Montford was programmed so that a linear gradient from +10C to -30C was produced over 16 hours. The blast freezer was set at -30C and the samples were placed in for an hour, until they had reached -30C. At the end of each freezing regime the samples were transferred to a -30C chest freezer. Prior to the mechanical testing the samples were then transferred to a -18C freezer were they remained for 48 hours. The mechanical testing was performed using an Instron Universal Testing machine, with an environmental test cabinet set at -18C, in order to assess the mechanical properties of the samples whilst they were at -18C. A wedge, fracture test was performed on the cubes of frozen tissue. A 30° wedge was driven through the middle of the top face of each cube at a crosshead speed of 10mm/min, to a displacement of 8mm which split the cube into two halves. This was repeated for several cubes for each freezing regime. This produced a force/displacement plot for each cube. These plots were overlaid for each freezing regime and each fruit and are shown in the figures.

For already frozen fruits, the measurement is made after cutting them whilst still frozen into 1cm cubes using a sharp blade and then performing the test as described above.

### Brief description of the invention

It is the first of object of the present invention to provide a process for the production of frozen fruits comprising the steps of
i) cooling fruits to 0 C,
ii) under-cooling fruits from 0 C to a temperature between -6 C and -15 C, preferably between -8 C and -12 C, the under-cooling being at a rate of between 2 C per hour and 320 C per hour, preferably above 10 C per hour, more preferably above 40 C per hour
iii) reducing the temperature further until ice formation occurs.

Preferably, the fruits are selected from the group consisting in, kiwi, mango, grapes, banana, berries, pears, apples, orange, lemon, peach, pineapple, melon, apricots, strawberries, raspberries, blackberries, blackcurrants, blueberry, red currant, nectarine, cranberry, passion fruit, papaya, lychees, pomegranate, fig, plum, lime, grapefruit, cherry, gooseberry, summer squash, persimmon, dates, tangerine, guava, kumquat & rhubarb. More preferably, the fruits are selected from the group consisting in kiwi, mango, grapes, banana, strawberries, raspberries, blackberries, blackcurrants, melon, blueberry, red currant, nectarine, pineapple, cranberry, peach.

Preferably, the under cooling is such that, during under cooling the temperature difference between the core and the surface of the fruit is less than 1.5 C.

Preferably also, the fruits are under-cooled to a temperature at least 5 C below their freezing point.

It is a second object of the present invention to provide frozen fruit salads made of individual fruit bits, wherein more than 50% by number, preferably above 80% of the fruit bits have a fracture force of less than 0.01kN for 1cm cubes.

Preferably, the fruits are selected from the group consisting in, kiwi, mango, grapes, banana, berries, pears, apples, orange, lemon, peach, pineapple, melon, apricots, strawberries, raspberries, blackberries, blackcurrants, blueberry, red currant, nectarine, cranberry, passion fruit, papaya, lychees, pomegranate, fig, plum, lime, grapefruit, cherry, gooseberry, summer squash, persimmon, dates, tangerine, guava, kumquat & rhubarb. More preferably, the fruits are selected from the group consisting in kiwi, mango, grapes, banana, strawberries, raspberries, blackberries, blackcurrants, melon, blueberry, red currant, nectarine, pineapple, cranberry, peach.

Preferably the frozen fruit salad is at a temperature of between -10 C and -20 C.

It is a third object of the present invention to provide frozen desserts comprising a frozen aerated edible confection and frozen fruits either as a topping or included in the frozen aerated confection and wherein more than 50% by number of the fruit bits have a fracture force of less than 0.01kN.

Preferably, the fruits are selected from the group consisting in kiwi, mango, grapes, banana, berries, pears, apples, orange, lemon, peach, pineapple, melon, apricots, strawberries, raspberries, blackberries, blackcurrants, blueberry, red currant, nectarine, cranberry, passion fruit, papaya, lychees, pomegranate, fig, plum, lime, grapefruit, cherry, gooseberry, summer squash, persimmon, dates, tangerine, guava, kumquat & rhubarb. More preferably, the fruits are selected from the group consisting in kiwi, mango, grapes, banana, strawberries, raspberries, blackberries, blackcurrants, melon, blueberry, red currant, nectarine, pineapple, cranberry, peach.

### Detailed description of the invention

The present invention will be further described in the following examples and with reference to the following figures which represent Force/displacement curve for various fruits have undergone various freezing processes:
Figure 1A relates to mango, frozen through a standard blast freezing process
Figure 1B relates to mango, frozen through a freezing process according to the invention.
Figure 2A relates to kiwi, frozen through a standard blast freezing process
Figure 2B relates to kiwi, frozen through a freezing process according to the invention
Figure 3A relates to strawberry, frozen through a standard blast freezing process
Figure 3B relates to strawberry, frozen through a freezing process according to the invention

### Comparative examples 1 to 3.

Mango, kiwi and strawberries were frozen under the following conditions.

The fruits were cut into 1cm cube, and were frozen in a blast freezer from ambient temperature to -30C within 1 hour. There was very limited under cooling (less than 1 degree beneath freezing point) and the temperature difference, before the formation of ice, between the surface and the core was between 1.5 and 4 C .
The samples were then stored in a freezer at -18 C and mechanical characteristics were measured.

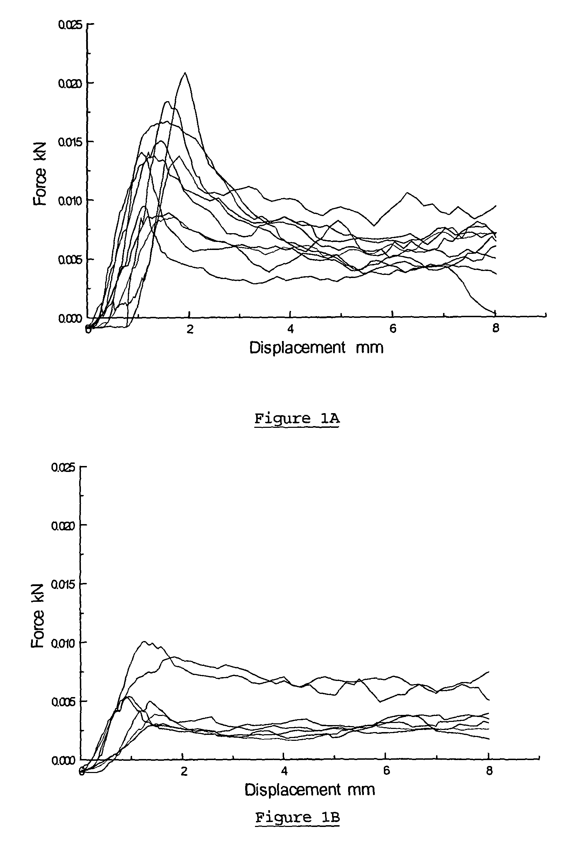

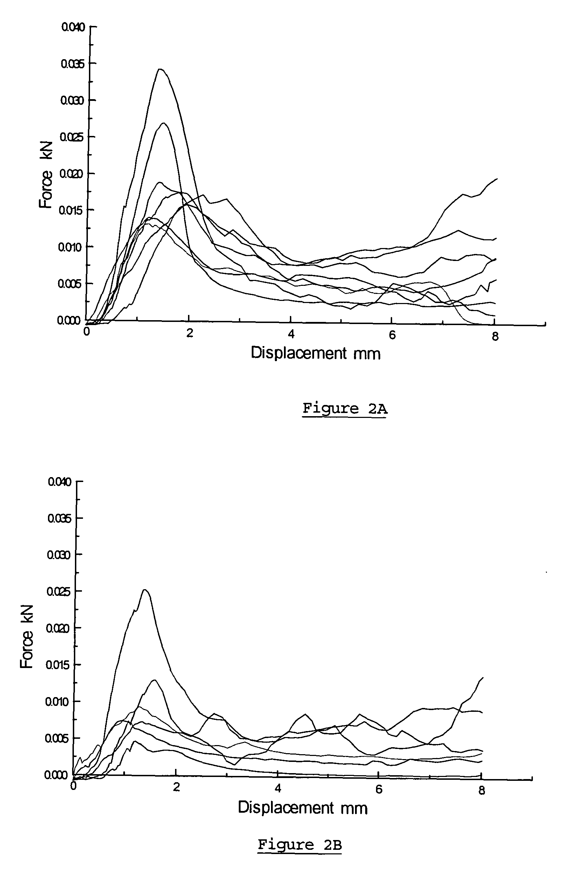

The force/displacement profiles of the obtained frozen fruits are disclosed in Figures 1A, 2A and 3A.

### Examples 4 to 6

Mango, kiwi, and strawberries were frozen under the following conditions.

The fruits were cut into 1cm cubes and were frozen from +10 C to -30 C in a Montford freezer at a rate of 2.5 C per hour over 16 hours. During this process, mango was undercooled to -9.8C, kiwi was undercooled to -9.3C, and strawberries were undercooled to -7.4C. The samples where then stored in a freezer at -18 C and mechanical characteristics were measured.

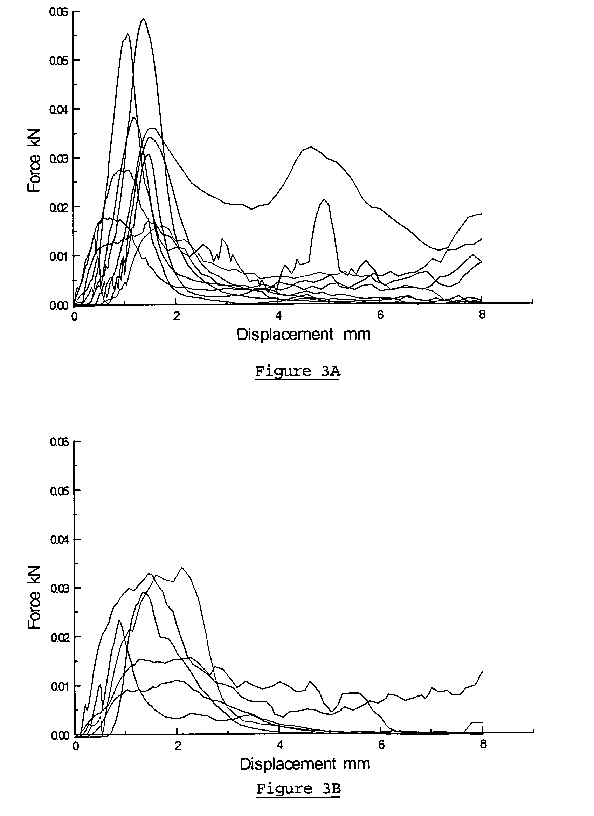

The force/displacement profiles of the obtained frozen fruits are disclosed in Figures 1B, 2B and 3B.

During the under-cooling process, the temperature difference between the core of the fruit pieces (5 mm for surface) and the surface of the fruit pieces (effectively, 1 mm beneath the surface) was less than 1 C, and typically around 0.5 C.

### Sensory assessment

Frozen fruits obtained in examples 1 to 3 and 4 to 6 were eaten frozen at -18 C. Examples 4 to 6 were found to have a much stronger flavour resembling the flavour of original fresh fruits whereas their corresponding frozen fruits in examples 1 to 3 were found to have a milder and 'flatter' taste. This was confirmed when tasting other fruits like bananas and grapes.

So, the process according to the invention provides a definite improvement in the flavour characteristic of frozen fruits.

### Mechanical assessment

The comparison of mechanical data between examples 1 to 3 on the one hand and 4 to 6 on the other hand, show that, for some fruits, a definite mechanical improvement is achieved through the process according to the invention. More particularly it allows the production of frozen fruits wherein more than 50% by number, preferably above 80% of the fruit bits have a fracture force of less than 0.01kN.

## Claims

1. Frozen fruits salad made of individual fruit bits, wherein more than 50% by number of the fruit bits have a fracture force of less than 0.01kN.

2. Frozen fruits salad according to claim 1 wherein the fruits are selected from the group consisting in kiwi, mango, grapes, banana, berries, pears, apples, orange, lemon, peach, pineapple, melon, apricots, strawberries, raspberries, blackberries, blackcurrants, blueberry, red currant, nectarine, cranberry, passion fruit, papaya, lychees, pomegranate, fig, plum, lime, grapefruit, cherry, gooseberry, summer squash, persimmon, dates, tangerine, guava, kumquat & rhubarb.

3. Frozen fruits salad according to claim 2 wherein, the fruits are selected from the group consisting in kiwi, mango, grapes, banana, strawberries, raspberries, blackberries, blackcurrants, melon, blueberry, red currant, nectarine, pineapple, cranberry, peach.

4. Frozen fruits salad according to claim 1, 2 or 3 wherein frozen fruits are at a temperature of between -10 C and -20C.

5. Frozen dessert comprising a frozen aerated edible confection and frozen fruits either as a topping or included in the frozen aerated confection wherein more than 50% by number of the fruit bits have a fracture force of less than 0.01kN.

6. Frozen dessert according to claim 5 wherein frozen fruits are selected from the group consisting in kiwi, mango, grapes, banana, berries, pears, apples, orange, lemon, peach, pineapple, melon, apricots, strawberries, raspberries, blackberries, blackcurrants, blueberry, red currant, nectarine, cranberry, passion fruit, papaya, lychees, pomegranate, fig, plum, lime, grapefruit, cherry, gooseberry, summer squash, persimmon, dates, tangerine, guava, kumquat & rhubarb.

7. Frozen dessert according to claim 6 wherein frozen fruits are selected from the group consisting in kiwi, mango, grapes, banana, strawberries, raspberries, blackberries, blackcurrants, melon, blueberry, red currant, nectarine, pineapple, cranberry, peach.
